# EUROPEAN PATENT APPLICATION

(11) **EP 4 365 435 A1**
(43) Date of publication of application: **08.05.2024**
(21) Application number: 21947803.9
(22) Date of filing: 30.07.2021
(51) Int. Cl.: F03B 13/22, F03B 3/16, F03B 3/18

(54) **WAVE ENERGY CONVERSION DEVICE**

(30) Priority: 29.06.2021 CN 202110733209
(71) Applicant: Hann-Ocean Energy Pte. Ltd., 408533 Singapore (SG)
(72) Inventor: HAN, Lei, Nantong, Jiangsu 409051 (CN)
(74) Representative: Keltie LLP
(86) International application number: PCT/CN2021/109454
(87) International publication number: WO 2023/272861

(57) **Abstract**

A wave energy conversion device, comprising a housing. A water inlet cavity (25) and a water outlet cavity (26) are provided in the housing, and a one-way flow guide grille is mounted on an opening of each of the two cavities; a water turbine is mounted between the two cavities, and the upper part of the water turbine can be connected to a main shaft of a permanent magnet generator (2); the one-way flow guide grilles of the water inlet cavity (25) and the water outlet cavity (26) are arranged in a transverse V-shaped manner along an up-down direction, and the housing is provided with a water inlet and outlet (23) at a V-shaped opening; the water inlet cavity (25) and the water outlet cavity (26) are combined in an asymmetric manner, and the water inlet cavity (25) and the water outlet cavity (26) are respectively provided with a portion connected to a top portion (19) of the housing, and an air discharge opening is disposed on said portion.

## Description

### Technical Field

The present invention relates to the field of clean energy source utilization, and in particular, to a wave energy conversion device.

### Background Art

With the growth of industrial scale, there is an increasing demand for energy. Increases in energy prices have led to the consideration of a variety of alternative energy sources. On the other hand, traditional fossil energy sources bring huge carbon emissions and pollution effects which are difficult to eliminate. In recent years, new clean energy sources, mainly wind energy and solar energy, have been increasingly applied, but there are problems of low energy density and unstable energy supply.

As a specific form of ocean energy, wave energy is also one of the most important energy sources among ocean energy, and its development and utilization are of vital importance to the alleviation of energy crisis and reduction of environmental pollution. The movement of turbulent waves produces huge, eternal and environmentally friendly energy. If kinetic energy of waves and wave energy of other water surfaces can be fully utilized, the future of global energy sources will be quite broad and bright.

In addition, wave energy conversion devices can be used as good wave energy absorption devices.

At present, some pioneers in the industry have made various beneficial attempts at wave energy power generation. For example, Japanese patent publication JP 11-117847 of Hatakeyama discloses an energy generation device, which has an inflow cavity and a discharge cavity. A front wall of the inflow cavity has a plurality of backflow-check boards disposed to open inward. A front wall of the discharge cavity has a plurality of inflow-check boards disposed to open outward. The inflow cavity and the discharge cavity are connected, and are separated in the middle by a partition with a connecting hole. A turbine, connected to a generator in the discharge cavity, is disposed in the connecting hole. The discharge cavity is provided with a lid.

However, such a known wave energy conversion device has some drawbacks in terms of efficiency in converting as much wave energy as possible, and thus is impractical. Therefore, it would be highly necessary to provide an efficient, reliable and cost-effective device for converting wave energy into electricity.

Chinese patent 200880131611.2 discloses an efficient wave energy conversion device, comprising a front portion and a rear portion directly opposite to the front portion, a top portion and a bottom portion directly opposite to the top portion, a water inlet cavity provided with a partition, a water inlet valve at the front portion between the top portion and the partition, and a water inlet cavity vent hole, wherein the water inlet valve allows flow of water in one direction into the water inlet cavity. A water outlet cavity has a water outlet valve located between the partition and the bottom portion, and a water outlet cavity vent hole disposed between the partition and the top portion, wherein the water outlet cavity vent hole is used for maintaining atmospheric pressure of air in the water outlet cavity. A connecting duct connects the partition of the water inlet cavity to the water outlet cavity, and a generator at least partially mounted in the connecting duct generates electrical energy in response to the flow of water into the water inlet cavity induced by wave energy.

The problem in the above prior art is that due to the need for the water inlet and outlet cavities to be arranged in a symmetric manner along an up-down direction, the water outlet cavity cannot be directly connected to a top portion of a housing, making it difficult to exhaust and reducing efficiency. The design of symmetry along the up-down direction leads to requirements for larger water inlets and outlets for both the water inlet and outlet cavities, which result in design difficulties, and are often difficult to meet in practice.

From a global perspective of the current status of wave power generation, the wave power generation still has disadvantages including low efficiency and poor stability.

Therefore, a newly designed wave energy conversion device is needed to make revolutionary changes and improve the efficiency and stability of wave energy conversion.

### Summary of the Invention

Objects of the present invention are to solve the deficiencies of existing technologies and to provide a newly designed wave energy conversion device to improve the efficiency and stability of wave energy conversion.

In order to achieve the objects, the present invention provides a wave energy conversion device, comprising a housing. A water inlet cavity and a water outlet cavity are provided in the housing, and a one-way flow guide grille is mounted on an opening of each of the two cavities; a water turbine is mounted between the two cavities, and the upper part of the water turbine can be connected to a main shaft of a permanent magnet generator; the one-way flow guide grilles of the water inlet cavity and the water outlet cavity are arranged in a transverse V-shaped manner along an up-down direction, and the housing is provided with a water inlet and outlet at a V-shaped opening; and the water inlet cavity and the water outlet cavity are combined in an asymmetric manner, and the water inlet cavity and the water outlet cavity are respectively provided with a portion connected to a top portion of the housing, and an air discharge opening is disposed on said portion.

The water inlet cavity is divided into a front portion of the water inlet cavity and a rear portion of the water inlet cavity, a cross-section of the front portion of the water inlet cavity is a quadrilateral, a wider bottom surface of the quadrilateral is the housing that faces waves, and a bottom portion of the front portion of the water inlet cavity is provided with a water inlet one-way flow guide grille which obliques in a manner that it is higher outward and lower inward; a cross-section of the rear portion of the water inlet cavity is a plane encompassed by a section of spiral line, and the spiral line is tangent to one side edge and intersects with the other side edge of the quadrilateral cross-section of the front portion of the water inlet cavity; a front end of the rear portion of the water inlet cavity communicates with the front portion of the water inlet cavity; a bottom portion of the rear portion of the water inlet cavity is connected to the bottom portion of the front portion of the water inlet cavity; and the bottom portion of the rear portion of the water inlet cavity is provided with a water turbine cavity to accommodate the water turbine and communicate with the water outlet cavity. The spiral line is an involute spiral line, of which an outer end is tangent to one side edge of the quadrilateral cross-section of the front portion of the water inlet cavity, and an inner end intersects with the other side edge of the quadrilateral cross-section of the front portion of the water inlet cavity.

A through hole is disposed on a top portion of the rear portion of the water inlet cavity, such that a water turbine propeller shaft provided in the rear portion of the water inlet cavity is connected to the permanent magnet generator on an upper portion of the housing, and a stator and a rotor of the water turbine are connected to the water turbine propeller shaft. A water turbine shaft sleeve is provided outside the water turbine propeller shaft, and an outer diameter of the water turbine shaft sleeve is one quarter to one half of a diameter of the rotor of the water turbine. The water turbine uses a combination of the stator and the rotor, and the stator is disposed in front of the rotor relative to a direction of water flow, and angles of attack of the stator and the rotor to the water flow are opposite.

The remaining portion in the housing, except the water inlet cavity, an energy exchange cavity, and the water turbine cavity, forms the water outlet cavity, and a lower portion of the water outlet cavity communicates with the bottom portion of the rear portion of the water inlet cavity through the water turbine cavity. The lower portion of the water outlet cavity is provided with a water outlet cavity one-way flow guide grille which is obliquely arranged such that it is higher outward and lower inward, an outer lower edge of the lower portion of the water outlet cavity is connected to a lower end of the water inlet and outlet, and an inner upper edge of the lower portion of the water outlet cavity is connected to a lower or bottom portion of the water inlet cavity. The one-way flow guide grilles of the water inlet cavity and the water outlet cavity are arranged in a transverse V-shaped manner along the up-down direction, and an angle formed between the one-way flow guide grilles is from greater than or equal to 30 degrees to less than 180 degrees.

An anti-fouling fence is provided on the water inlet and outlet. A bottom portion and a rear side of the housing are transitioned with an arc plate. Multiple wave energy conversion devices can further be connected for use.

A beneficial effect of the present invention is to make significant fluid mechanical performance improvement on key features of hydrodynamic energy or wave energy absorption, making hydrodynamic energy more stable, thereby providing a more stable electricity output. A water inflow angle is optimized, which greatly improves the turbine efficiency in high-speed rotating vortices. The shape of the water inlet cavity improves an energy concentration effect and greatly improves energy absorption efficiency. Meanwhile, the one-way flow guide grilles arranged in a transverse V-shaped manner along the up-down direction reduce draft requirements, thereby reducing manufacturing and mounting costs. The bottom portion and the rear side of the housing are transitioned with the arc plate to reduce vortices at the bottom portion of the housing, thereby improving the water discharge efficiency of the water outlet cavity or improving the energy absorption efficiency. By means of a large number of pool tests (more than 1,600 times) and computer simulations, it has been confirmed that the wave energy conversion device of the present invention can convert wave energy into electrical energy more efficiently or improve the energy absorption efficiency, and greatly improve the stability of output electricity at the same time. Compared with the prior art mentioned in the background art, the present invention has higher efficiency and a more stable power output under the same design conditions, and due to a smaller design size, production costs will be further reduced.

In order to make the above-mentioned objects, features and advantages of the present invention more obvious and understandable, preferred embodiments are given below and described in detail with reference to the accompanying drawings.

### Brief Description of the Drawings

In order to explain the specific embodiments of the present invention or the technical solutions in the prior art more clearly, the drawings that need to be used in the description of the specific embodiments or the prior art will be briefly introduced below. Apparently, the drawings described below are only some of the embodiments of the present invention. Other drawings may further be obtained by those of ordinary skill in the art according to these drawings, without exertion of any inventive work.
FIG. 1 is a schematic diagram of an appearance of an embodiment of the present invention;
FIG. 2 is a schematic diagram of a structure of FIG. 1 with a top cover removed;
FIG. 3 is a schematic diagram of a structure of a bottom portion of FIG. 1;
FIG. 4 is a schematic diagram of a structure of FIG. 1 with one side removed;
FIG. 5 is a longitudinal sectional view of the embodiment of FIG. 1;
FIG. 6 is a schematic diagram of a structure of another embodiment of the present invention with the top cover removed; and
FIG. 7 is a schematic diagram of the appearance of the embodiment of FIG. 6.

### Detailed Description

The technical solutions in the embodiments of the present invention will be clearly and completely described below with reference to the drawings in the embodiments of the present invention. Apparently, the described embodiments are only a part of the embodiments of the present invention, rather than all of the embodiments. Generally, the components of the embodiments of the present invention described and illustrated in the drawings herein may be arranged and designed in a variety of different configurations. Therefore, the detailed description of the embodiments of the present invention provided in the drawings below is not intended to limit the scope of protection of the claimed invention, but only indicates selected embodiments of the present invention. Based on the embodiments of the present invention, all other embodiments obtained by those skilled in the art without any inventive work fall within the scope of protection of the present invention.

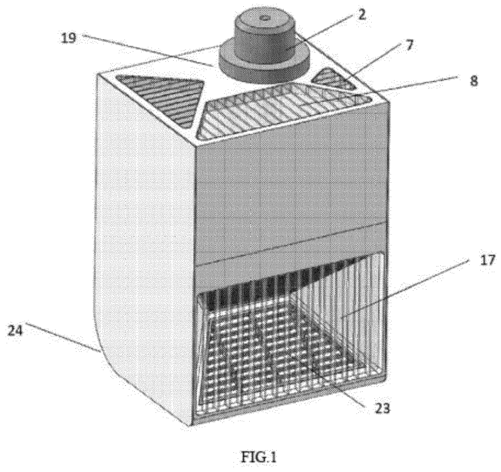

The present invention will be described in further detail below, so that those skilled in the art can implement it with reference to the description text. First, reference is made to FIG. 1, which is a schematic diagram of an appearance of an embodiment of the present invention. In the embodiment of FIG. 1, a wave energy conversion device is a watertight container, and the side of a housing thereof facing waves is defined as a front end, a lower portion of the front end is provided with a water inlet and outlet 23, and the water inlet and outlet 23 is provided with an anti-fouling fence 17.

A lower portion of a rear end is provided with an arc-shaped chamfer 24. By means of fluid mechanics simulation, it is confirmed that at this location, arc connection can greatly reduce vortices at a bottom portion 11 of the housing, thereby improving the water discharge efficiency and energy absorption efficiency of a water outlet cavity 26. In addition, the impact of hydrodynamic force on equipment is reduced.

An upper portion of the housing is also provided with a permanent magnet generator 2. The permanent magnet generator 2 is connected to a stator 5 and a rotor 6 of a water turbine through a water turbine shaft sleeve 32 and a water turbine propeller shaft disposed therein. The stator 5 and the rotor 6 of the water turbine are disposed in a water turbine cavity 30 at a bottom portion of a rear portion 28 of a water inlet cavity.

A top portion 19 of the housing is provided with a grille-shaped air discharge opening 7 of the water outlet cavity and a grille-shaped air discharge opening 8 of the water inlet cavity.

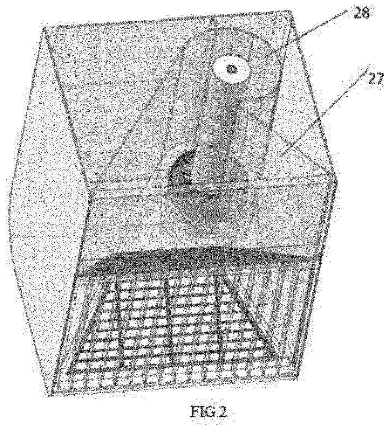

Next, reference is made to FIG. 2, which is a schematic diagram of a structure of FIG. 1 with a top cover removed. In FIG. 2, the housing is provided with the water inlet and outlet 23 at a lower portion of a side surface facing the waves, the wave energy conversion device has the water inlet cavity 25 and the water outlet cavity 26, and openings of the two cavities absorb wave energy from the sea by means of the one-way flow guide grilles mounted on the openings of the two cavities. The water turbine is mounted between the two cavities to convert hydraulic energy between the two cavities into mechanical energy. The upper part of the water turbine can be connected to the permanent magnet generator 2 by means of the water turbine shaft sleeve 32 and the water turbine propeller shaft 16 disposed therein, so that the mechanical energy can be converted into electrical energy. Such a design makes it possible for the permanent magnet generator 2 placed on a top end of the housing to avoid being immersed in seawater, thus greatly extending the service life thereof.

The water inlet cavity 25 consists of two portions, i.e., a front portion 27 of the water inlet cavity and a rear portion 28 of the water inlet cavity, and the two portions are linked up to form the water inlet cavity 25, wherein a through hole 29 is disposed on a top portion of the rear portion 28 of the water inlet cavity, so that the water turbine propeller shaft 16 and the water turbine shaft sleeve 32 which are disposed in a cavity of the rear portion 28 of the water inlet cavity are connected to the permanent magnet generator 2 on the upper portion of the housing. The water turbine cavity 30 is formed at the bottom portion of the rear portion 28 of the water inlet cavity, and the stator 5 and the rotor 6 of the water turbine are connected to the water turbine propeller shaft 16. A bottom portion of the water turbine cavity 30 formed at the rear portion 28 of the water inlet cavity communicates with the water inlet cavity 25 and the water outlet cavity 26.

A cross-section of the front portion 27 of the water inlet cavity is a quadrilateral, a wider bottom surface of the quadrilateral is the housing that faces waves, and a bottom portion of the front portion 27 of the water inlet cavity is provided with a water inlet one-way flow guide grille 3 which obliques in a manner that it is higher outward and lower inward; a cross-section of the rear portion 28 of the water inlet cavity is a plane encompassed by a section of spiral line, and the spiral line is tangent to one side edge and intersects with the other side edge of the quadrilateral cross-section of the front portion 27 of the water inlet cavity; a front end of the rear portion 28 of the water inlet cavity communicates with the front portion 27 of the water inlet cavity; a bottom portion of the rear portion 28 of the water inlet cavity is connected to the bottom portion of the front portion 27 of the water inlet cavity; the spiral line is an involute spiral line, of which an outer end is tangent to one side edge of the quadrilateral cross-section of the front portion of the water inlet cavity, and an inner end intersects with the other side edge of the quadrilateral cross-section of the front portion of the water inlet cavity. The top portion 19 of the housing is provided with the air discharge opening 7 of the water inlet cavity.

It should be understood that the above embodiment is a preferred embodiment of the present invention. In some other embodiments, the water inlet cavity may also be in other different shapes. It is only necessary to meet the conditions that the water inlet cavity has a wider front portion and gradually narrows to the rear portion, and a bottom surface of the rear portion communicates with the water outlet cavity by means of a water turbine cavity.

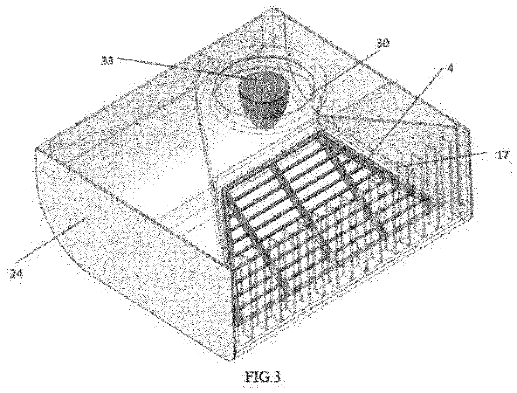

FIG. 3 is a schematic diagram of a structure of a bottom portion of FIG. 1. It can be seen in FIG. 3 that the water turbine cavity 30, in which the rotor 6 of the water turbine is disposed, is disposed on the bottom surface of the rear portion of the water inlet cavity. The lower portion of FIG. 3 is a bottom surface of the wave energy conversion device, on which a water turbine propeller cap 33 is provided. It can be seen from FIG. 3 that a rear end of a bottom surface of the housing has the arc-shaped chamfer 24. A one-way flow guide grille 4 of the water outlet cavity and the anti-fouling fence 17 of a water inlet can further be seen in FIG. 3.

In some embodiments, the structure of the one-way flow guide grilles of the present invention is the same as that of the water inlet and outlet valve in Chinese patent 200880131611.2. When a wave is at the peak, the water inlet one-way flow guide grille 3 is opened by external wave pressure, so that water enters in one direction, and when the wave is at the trough, the one-way flow guide grille 4 of the water outlet cavity is opened by a difference in internal and external pressure, so that water is discharged in one direction.

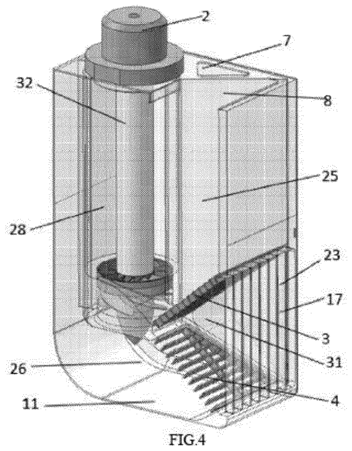

Next, reference is made to FIG. 4, which is a schematic diagram of a structure of FIG. 1 with one side removed. It can be clearly seen in FIG. 4 that the one-way flow guide grilles of an energy exchange cavity 31 and the water outlet cavity 26 of the wave energy conversion device are arranged in a transverse V-shaped manner along an up-down direction. The one-way flow guide grilles of the two cavities are disposed face to face at a certain angle, and the angle formed between the grilles may be ranged from greater than or equal to 30 degrees to less than 180 degrees. The one-way flow guide grille 3 of the water inlet cavity is placed above the one-way flow guide grille 4 of the water outlet cavity. In a lateral vertical section, the one-way flow guide grilles are arranged gradually closer together in a transverse V-shaped manner. In a horizontal section, an inverted V shape which is gradually smaller is formed. The V shape here indicates a structure of which the width is gradually reduced, and the narrowest portion of the V shape is not necessarily connected. The energy consumption of internal reflected waves generated by a rear wall of the water inlet cavity is reduced. This arrangement allows water in the water inlet cavity 27 and water in the water outlet cavity 26 to alternately flow in and out by means of the energy exchange cavity 31, such that kinetic energy exchange with external seawater can be performed in a smallest shared space. In addition, when the total size of an opening of the water inlet and outlet at the front part of the equipment (including the one-way flow guide grilles of the water inlet cavity and the water outlet cavity) remains unchanged, the sectional area through the guide grilles can be increased due to a triangular relationship. Therefore, more kinetic energy in the waves is captured, and the efficiency is improved. Furthermore, the design may further reduce equipment draft.

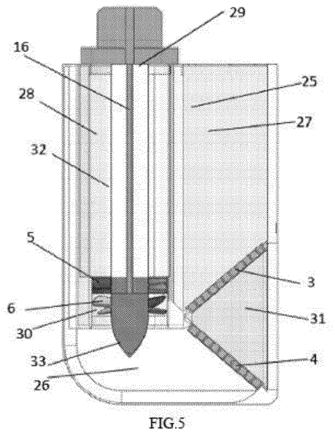

FIG. 5 is a longitudinal sectional view of the embodiment of FIG. 1. The structure of the water turbine can be seen in FIG. 5. In this embodiment, the water turbine uses a combination of the stator 5 and the rotor 6. The stator 5 is disposed in front of the rotor 6 relative to a direction of water flow, and angles of attack of the stator 5 and the rotor 6 to the water flow are opposite. This combination of the stator 5 and the rotor 6 optimizes a water inflow angle of the rotor 6, and reduces the kinetic energy loss of water vortices behind the water turbine, thereby improving the efficiency of the water turbine. In this way, the kinetic energy in the water flow can be better converted into rotational mechanical energy or torque. The efficiency of the water turbine is greatly improved in high-speed rotating vortices. Experiments have shown that appropriately thickening the water turbine propeller shaft to one quarter to one half the diameter of the rotor of the water turbine may effectively increase rotational kinetic energy of the water flow.

The front portion 27 of the water inlet cavity 25 is wide at the front and narrow at the rear to form an inverted V-shaped water inlet structure, which introduces water into the rear portion 28 of the water inlet cavity located above the water turbine. An inclined side surface of the front portion 27 of the water inlet cavity is tangentially connected to a side surface of the rear portion 28 of the water inlet cavity, so that the water flow rotates. This structure minimizes reflected waves generated by a wall of the rear portion of the water inlet cavity, and instead forms a rotating water body above the water turbine. Because the high-speed rotating vortices have large moments of inertia, the sloshing of the water body at the rear portion of the water inlet cavity can be effectively reduced, making water energy more stable, thereby providing a more stable electricity output.

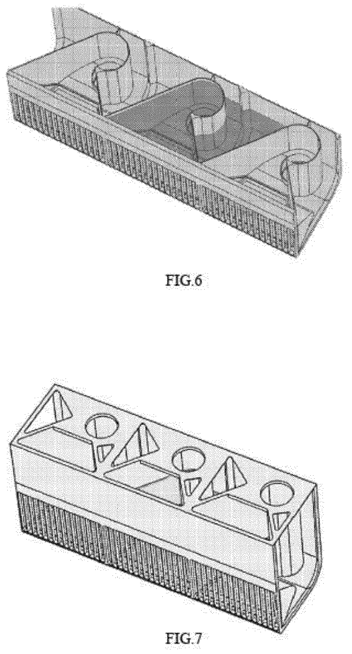

Next, reference is made to FIG. 6, which is a schematic diagram of a structure of another embodiment of the present invention with the top cover removed. In the embodiment of FIG. 6, several wave energy conversion devices of the embodiment of FIG. 1, from which housings at adjacent side surfaces are removed, are connected side by side to form a larger set of wave energy conversion devices, the appearance of which is shown in FIG. 7.

Although the embodiments of the present invention have been disclosed as above, they are not limited to the applications listed in the specification and embodiments, and can be applied in various fields suitable for the present invention. Other modifications can be easily implemented for those familiar with the art. Therefore, without departing from the general concept defined by the claims and equivalent scope, the present invention is not limited to the specific details and the illustrations shown and described herein.

## Claims

1. A wave energy conversion device, comprising a housing, wherein a water inlet cavity and a water outlet cavity are provided in the housing, and a one-way flow guide grille is mounted on an opening of each of the two cavities; a water turbine is mounted between the two cavities, and the upper part of the water turbine can be connected to a main shaft of a permanent magnet generator; the one-way flow guide grilles of the water inlet cavity and the water outlet cavity are arranged in a transverse V-shaped manner along an up-down direction, and the housing is provided with a water inlet and outlet at a V-shaped opening; and the water inlet cavity and the water outlet cavity are combined in an asymmetric manner, and the water inlet cavity and the water outlet cavity are respectively provided with a portion connected to a top portion of the housing, and an air discharge opening is disposed on said portion.

2. The wave energy conversion device according to claim 1, wherein the water inlet cavity is divided into a front portion of the water inlet cavity and a rear portion of the water inlet cavity, a cross-section of the front portion of the water inlet cavity is a quadrilateral, a wider bottom surface of the quadrilateral is the housing that faces waves, and a bottom portion of the front portion of the water inlet cavity is provided with a water inlet one-way flow guide grille which obliques in a manner that it is higher outward and lower inward; a cross-section of the rear portion of the water inlet cavity is a plane encompassed by a section of spiral line, and the spiral line is tangent to one side edge and intersects with the other side edge of the quadrilateral cross-section of the front portion of the water inlet cavity; a front end of the rear portion of the water inlet cavity communicates with the front portion of the water inlet cavity; a bottom portion of the rear portion of the water inlet cavity is connected to the bottom portion of the front portion of the water inlet cavity; and the bottom portion of the rear portion of the water inlet cavity is provided with a water turbine cavity to accommodate the water turbine and communicate with the water outlet cavity.

3. The wave energy conversion device according to claim 2, wherein the spiral line is an involute spiral line, of which an outer end is tangent to one side edge of the quadrilateral cross-section of the front portion of the water inlet cavity, and an inner end intersects with the other side edge of the quadrilateral cross-section of the front portion of the water inlet cavity.

4. The wave energy conversion device according to claim 2, wherein a through hole is disposed on a top portion of the rear portion of the water inlet cavity, such that a water turbine propeller shaft provided in the rear portion of the water inlet cavity is connected to the permanent magnet generator on an upper portion of the housing, and a stator and a rotor of the water turbine are connected to the water turbine propeller shaft.

5. The wave energy conversion device according to claim 4, wherein a water turbine shaft sleeve is provided outside the water turbine propeller shaft, and an outer diameter of the water turbine shaft sleeve is one quarter to one half of a diameter of the rotor of the water turbine.

6. The wave energy conversion device according to claim 1, wherein the water turbine uses a combination of the stator and the rotor, and the stator is disposed in front of the rotor relative to a direction of water flow, and angles of attack of the stator and the rotor to the water flow are opposite.

7. The wave energy conversion device according to claim 2, wherein the remaining portion in the housing, except the water inlet cavity, an energy exchange cavity, and the water turbine cavity, forms the water outlet cavity, and a lower portion of the water outlet cavity communicates with the bottom portion of the rear portion of the water inlet cavity through the water turbine cavity.

8. The wave energy conversion device according to claim 7, wherein the lower portion of the water outlet cavity is provided with a water outlet cavity one-way flow guide grille which is obliquely arranged such that it is higher outward and lower inward, an outer lower edge of the lower portion of the water outlet cavity is connected to a lower end of the water inlet and outlet, and an inner upper edge of the lower portion of the water outlet cavity is connected to a lower or bottom portion of the water inlet cavity.

9. The wave energy conversion device according to claim 1, wherein the one-way flow guide grilles of the water inlet cavity and the water outlet cavity are arranged in a transverse V-shaped manner along the up-down direction, and an angle formed between the one-way flow guide grilles is from greater than or equal to 30 degrees to less than 180 degrees.

10. The wave energy conversion device according to claim 1, wherein an anti-fouling fence is provided on the water inlet and outlet.

11. The wave energy conversion device according to claim 1, wherein a bottom portion and a rear side of the housing are transitioned with an arc plate.

12. The wave energy conversion device according to claim 1, wherein multiple wave energy conversion devices can further be connected for use.
